(19) Europäisches Patentamt
European Patent Office
Office européen des brevets

(11) Veröffentlichungsnummer: **0 242 609 B1**

## (12) EUROPÄISCHE PATENTSCHRIFT

(45) Veröffentlichungstag der Patentschrift: **19.02.92**

(21) Anmeldenummer: **87104230.5**

(22) Anmeldetag: **23.03.87**

(51) Int. Cl.⁵: **H02J 3/00**, H02J 13/00, G06F 15/56

(54) **Koppelleitebene.**

(30) Priorität: **16.04.86 DE 3612863**

(43) Veröffentlichungstag der Anmeldung:
**28.10.87 Patentblatt 87/44**

(45) Bekanntmachung des Hinweises auf die Patenterteilung:
**19.02.92 Patentblatt 92/08**

(84) Benannte Vertragsstaaten:
**CH DE FR LI**

(56) Entgegenhaltungen:

REGELUNGSTECHNISCHE PRAXIS, Band 21, Nr. 5, 1979, Seiten 137-142, München, DE; K.F. FRÜH: "Tradition und Moderne: Das dezentrale Prozessautomatisierungssystem von Siemens"

REGELUNGSTECHNISCHE PRAXIS, Band 22, Nr. 3, 1980, Seiten 73-81, München, DE; W. SENDLER: "Eine fehlertolerierende Reglerstation auf der Basis eines busorientierten Multi-Mikrorechner-Systems"

(73) Patentinhaber: **SIEMENS AKTIENGESELL-SCHAFT**
**Wittelsbacherplatz 2**
**W-8000 München 2(DE)**

(72) Erfinder: **Hofmann, Horst, Dipl.-Ing.**
**Lerchenweg 1**
**W-8526 Bubenreuth(DE)**
Erfinder: **Sauer, Hans-Jürgen, Dipl.-Ing.**
**Schlesierstrasse 9**
**W-8522 Herzogenaurach(DE)**
Erfinder: **Lochner, Karl-Heinz, Dipl.-Ing.**
**Dechsendorfer Strasse 24**
**W-8551 Röttenbach(DE)**
Erfinder: **Bremer, Klaus, Dipl.-Ing.**
**Eskilstunastrasse 17**
**W-8520 Erlangen(DE)**

CONTROL AND INSTRUMENTATION, Band 9, Nr. 6, Juni 1977, Seiten 41-43, London, GB; "Distributed processing power - a new tool for production control"

PROCEEDINGS OF THE 8TH TRIENNIAL WORLD CONGRESS OF THE INTERNATIONAL FEDERATION OF AUTOMATIC CONTROL, Kyoto, 24.-28. August 1981, Band 6 "Electrical Power Systems", Seiten 3299-3301, Pergamon Press, New York, US; M. FURUSE et al.: "Results of field experience of digital relaying system for 154 kV - 66kV transmission lines"

**Beschreibung**

Die Erfindung betrifft eine Kraftwerksleittechnik mit einer Einzelleitebene für die zu steuernden Komponenten einer Prozeßkomponentenebene, mit einer Gruppenleitebene, in der Automatisierungsgeräte angeordnet sind, durch die jeweils mehrere Baugruppen der Einzelleitebene zu steuern sind, mit einer Kommunikationsebene, in der durch Datenleitungen die Automatisierungsgeräte der Gruppenleitebene miteinander verbunden sind, und mit einer allen anderen Ebenen übergeordneten Prozeßleitebene.

Mit einer derartigen Kraftwerksleittechnik sollen neben der Steuerung von Komponenten auch Schutzaufgaben durchführbar sein. Diese Schutzaufgaben sind durch logische Verknüpfungen speicherprogrammiert zu lösen.

Aus "Regelungstechnische Praxis", Band 21, Nr. 5, 1979, Seiten 137 bis 142, ist ein Prozeßautomatisierungssystem bekannt, das eine Einzelleitebene, genannt untere Automatisierungsebene, eine Gruppenleitebene, genannt mittlere Automatisierungsebene, eine Kommunikationsebene, genannt Fernbus, und eine Prozeßleitebene, genannt obere Automatisierungsebene und Leitebene aufweist. Die Leitebene ist dabei nur eine Eingabeeinheit.

Ein ähnliches Prozeßautomatisierungssystem ist aus "Regelungstechnische Praxis", Band 22, Nr. 3, 1980, Seiten 73 bis 81, bekannt. Auch das dort gezeigte System besteht aus einer Einzelleitebene, einer Gruppenleitebene und einer Kommunikationsebene, genannt Systembus. Die Verbindung der Bauteile der Einzelleitebene untereinander ist mit Stationsbus bezeichnet.

Die Gruppenleitebene besteht in diesem System aus einer Konfigurationsrechnerebene und einer Funktionsrechnerebene, wobei die Konfigurationsrechner die Zuordnung der von der Reglerstation durch die Funktionsrechner zu bearbeitenden Regelaufgaben vorgeben.

Da die gesamte Kraftwerksleittechnik hochverfügbar und fehlerfrei konzipiert sein soll, ist es bei den bekannten Prozeßautomatisierungssystemen notwendig, daß die Bauteile der Gruppenleitebene mehrkanalig bzw. redundant ausgestattet sind. Die Kapazität dieser Bauteile oder Prozessoren reicht dann aus, um Fehler im System der Kraftwerksleittechnik zu kompensieren. Nach Erkennen eines Fehlers kann die Kraftwerksleittechnik mit den zusätzlichen Prozessoren fehlerfrei weiterbetrieben werden.

Das Prozeßautomatisierungssystem aus "Regelungstechnische Praxis", Band 22, Nr. 3, 1980, sieht einen solchen redundant angeordneten Prozessor in der Gruppenleitebene vor. Er ist in der mit Konfigurationsrechnerebene bezeichneten Gruppenleitebene mit "Reserve" bezeichnet.

Eine derartige Leittechnik benötigt einen sehr großen Hardware-Aufwand und ist daher besonders für mittlere und große Kraftwerke unwirtschaftlich.

In einer anderen bekannten Kraftwerksleittechnik werden System- und Komponentenschutz durch logische Verknüpfungen mit dezentralen, einkanaligen Prozessoren sichergestellt. Diese externen Prozessoren sind einigen bestimmten Aggregaten zugeordnet. Eine Verknüpfung der für die Schutzaufgaben notwendigen Signale über Datenleitungen und damit eine Koordinierung des System- und Komponentenschutzes ist bei einem derartigen Einsatz externer Prozessoren zunächst nicht durchführbar. Die externen Prozessoren sind nämlich von der Kommunikationsebene der Kraftwerksleittechnik entfernt angeordnet. Für eine Vernüpfung sind daher aufwendige Einzeldrahtverbindungen erforderlich. Eine Steigerung der Flexibilität der Anlage ist dabei nur durch noch größere Verdrahtung erreichbar. Die zusätzliche feste Verdrahtung ist aber aufwendig und unwirtschaftlich.

Der Erfindung liegt die Aufgabe zugrunde, eine Kraftwerksleittechnik zu entwickeln, in welcher neben der Steuerung auch Schutzaufgaben, die logische Verknüpfungen und Signalaustausch erfordern, speicherprogrammiert mit geringem apparativen Aufwand stets zuverlässig zu lösen sind. Es soll weder die gesamte Leittechnik hoch verfügbar und fehlersicher aufgebaut sein, was besonders bei großen Anlagen unwirtschaftlich wäre, noch sollen externe Prozessoren Anwendung finden, da das eine komplizierte zusätzliche Verdrahtung erforderte.

Die Aufgabe wird erfindungsgemäß dadurch gelöst, daß zwischen der Einzelleitebene und der Gruppenleitebene eine Koppelleitebene angeordnet ist, daß sich in der Koppelleitebene Koppelprozessoren befinden, die unabhängig von den übergeordneten, vorgeschalteten Automatisierungsgeräten der Gruppenleitebene frei programmierbar sind, daß die Koppelprozessoren über Datenleitungen mit den untergeordneten Baugruppen der Einzelleitebene verbunden sind und daß neben den in den Koppelprozessoren autark durchgeführten Steuerungs- und Schutzaufgaben auch Aufgaben von der übergeordneten Gruppenleitebene über die Koppelleitebene an die Einzelleitebene weitergeleitet werden.

Hiermit wird der Vorteil erzielt, daß unter der Gruppenleitebene eine zusätzliche Automatisierungsebene realisiert ist. In dieser Ebene werden Steuerungs- und besonders Schutzaufgaben in speicherprogrammierbarer Kraftwerksleittechnik durchgeführt. Durch diese Verlagerung der Steuerungs- und Schutzaufgaben auf eine tiefere Ebene kommt man bei hoher Qualität mit weniger elektronischen Baugruppen aus. Die Wirtschaftlichkeit der Kraftwerksleittechnik wird gegenüber bekannten Leittechniken gesteigert. Die erfindungsgemäße Koppelleitebene steht mit der übergeordneten Gruppenleitebene in Verbindung. Dadurch ist sichergestellt, daß neben den in den Koppelprozessoren autark durchgeführten Steuerungs- und Schutzaufgaben auch Aufgaben von der übergeordneten Gruppenleitebene über die Koppelleitebene an die Einzelleitebene weiterzuleiten sind.

Beispielsweise ist zu jedem Koppelprozessor ein gleichartiger Koppelprozessor parallelgeschaltet. Dadurch steht bei Ausfall eines Koppelprozessors stets sofort ein Ersatz bereit.

In jedem Koppelprozessor sind beispielsweise alle prozessorspezifischen Bauteile doppelt vorhanden. Die sich entsprechenden Bauteile arbeiten synchron. Mit den synchron arbeitenden Bauteilen ist eine Überwachungsschaltung verbunden, die die Signale der einander entsprechenden Bauteile miteinander vergleicht. Bei einer Abweichung wird ein Fehlersignal abgegeben und auf den parallelgeschalteten Koppelprozessor umgeschaltet. Hierdurch wird die Betriebssicherheit der Kraftwerksleittechnik weiter erhöht.

Zwischen den Baugruppen der Einzelleitebene und den Koppelprozessoren der Koppelleitebene sind Datenbusse angeordnet. Ein Datenanalysesystem, das den Signalaustausch auf Fehlerfreiheit überwacht, steht mit diesen Datenbussen in Verbindung. Dadurch werden die benötigten Daten zwischen der Einzelleitebene und der Koppelleitebene fehlersicher übermittelt. Eine doppelte Ausführung der Datenbusse erhöht die Betriebssicherheit nochmals.

Mit der Erfindung wird der Vorteil erzielt, daß durch eine untergeordnete Automatisierungsebene System- und Komponentenschutzaufgaben mit einfachen Mitteln und trotzdem mit hoher Verfügbarkeit und großer Sicherheit realisierbar sind. Die System- und Komponentenschutzaufgaben sind nach der Erfindung auf wirtschaftliche Weise speicherprogrammiert zu lösen.

Der Signalaustausch ist durch ein hochverfügbares Bussystem fehlersicher. Dabei ist die Zahl der an einen Koppelprozessor angeschlossenen Baugruppen der Einzelleitebene variabel und damit an die Systemgröße und an die Art der Baugruppen anpaßbar.

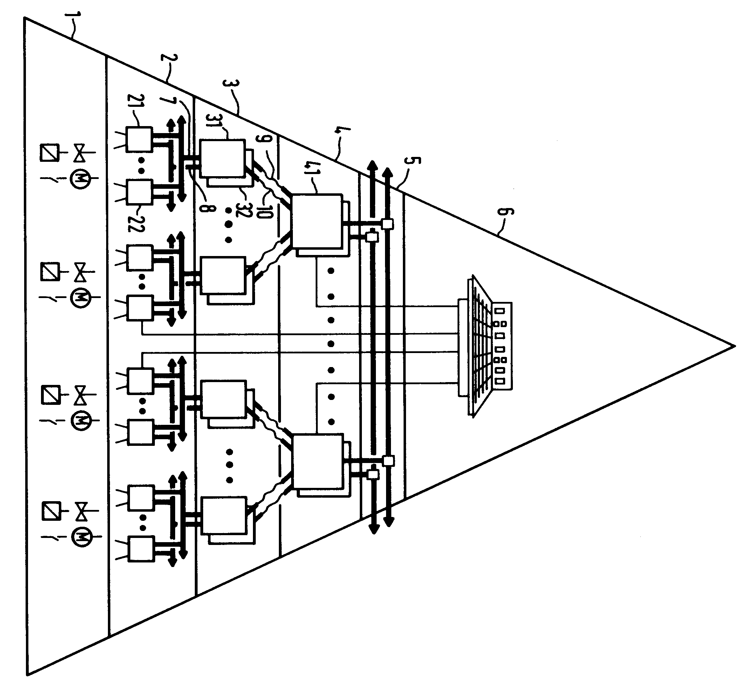

Die Erfindung wird anhand der Zeichnung näher erläutert:
Die Figur zeigt einen schematischen Aufbau einer Kraftwerksleittechnik, die eine erfindungsgemäße Koppelleitebene enthält.

In einer Kraftwerksleittechnik wird eine sehr große Anzahl verschiedener Komponenten überwacht und gesteuert. Derartige Komponenten sind beispielsweise Pumpen, Ventile, Schieber oder andere Armaturen eines Kraftwerkes. Bei einer schematischen Übersicht einer Kraftwerksleittechnik sind diese Komponenten in der untersten Ebene, einer Prozeßkomponentenebene 1, angeordnet. Der Prozeßkomponentenebene 1 ist Einzelleitebene 2 übergeordnet. Dort befinden sich Antriebssteuerbaugruppen 21 und Signalaufbereitungsbaugruppen 22, die miteinander und mit den Komponenten der Prozeßkomponentenebene 1 verbunden sind. Der Einzelleitebene 2 ist erfindungsgemäß eine Koppelleitebene 3 übergeordnet. In der Koppelleitebene 3 befinden sich Koppelprozessoren 31. Jeweils ein Koppelprozessor 31 ist mit mehreren Antriebssteuerbaugruppen 21 und Signalaufbereitungsbaugruppen 22 in der Einzelleitebene 2 über einen Datenbus 7 verbunden. Die Koppelprozessoren 31 sind hochverfügbar und fehlersicher und sind unabhängig von in einer übergeordneten Gruppenleitebene 4 angeordneten Automatisierungsgeräten 41, mit denen sie über Datenbusse 9 verbunden sind, frei programmierbar. Der größte Teil der Steuerungs- und Überwachungsaufgaben werden durch die erfindungsgemäßen Koppelprozessoren 31 ausgeführt. Die Aufgaben der übergeordneten Automatisierungsgeräte 41 sind in der erfindungsgemäßen Kraftwerksleittechnik nur gering. Daher reicht es aus, daß gemäß der Erfindung nur die Koppelprozessoren 31 in aufwendiger Technik erstellt sind, während die Automatisierungsgeräte 41 mit nur kleinem Hardware-Aufwand auskommen. Durch das Einschieben einer der Gruppenleitebene 4 untergeordneten hochverfügbaren und fehlersicheren Koppelleitebene 3 ist ein wirtschaftlicher Aufbau einer großen Kraftwerksleittechnik erst durchführbar. Der Mehraufwand für die Koppelleitebene 3 wird durch den geringeren Hardware-Aufwand in der Gruppenleitebene 4 weit mehr als ausgeglichen.

Datenleitungen der Automatisierungsgeräte 41 sind in der der Gruppenleitebene 4 übergeordneten Kommunikationsebene 5 miteinander verbunden. Allen Ebenen ist die Prozeßleitebene 6 übergeordnet.

Um die Verfügbarkeit der Koppelleitebene 3 weiter zu verbessern, ist zu jedem Koppelprozessor 31 ein gleichartiger Koppelprozessor 32 parallelgeschaltet, der über einen separaten Datenbus 8 mit der Einzelleitebene 2 und über einen separaten Datenbus 10 mit der Gruppenleitebene 4 verbunden ist. Jeder der beiden Koppelprozessoren 31 und 32 enthält in doppelter Ausführung synchron arbeitende Bauteile, die durch Vergleicher überwacht sind. Ein den Datenbussen 7 bis 10 zugeordnetes Datenanalysesystem sichert eine fehlerfreie Datenübertragung. Falls ein Koppelprozessor 31, 32 ausfällt, wird sofort das vorhandene Ersatzsystem aktiviert. Mit der erfindungsgemäßen Kraftwerksleittechnik sind Steuerungs-, Regelungs- und Schutzaufgaben speicherprogrammiert zu lösen, ohne daß die gesamte Leittechnik hochverfügbar und fehlersicher aufgebaut ist.

**Patentansprüche**

1. Kraftwerksleittechnik mit einer Einzelleitebene (2) für die zu steuernden Komponenten einer Prozeßkomponentenebene (1), mit einer Gruppenleitebene (4), in der Automatisierungsgeräte (41) angeordnet sind, durch die jeweils mehrere Baugruppen (21, 22) der Einzelleitebene (2) zu steuern sind, mit einer Kommunikationsebene (5), in der durch Datenleitungen die Automatisierungsgeräte (41) der Gruppenleitebene (4) miteinander verbunden sind, und mit einer allen anderen Ebenen übergeordneten Prozeßleitebene (6),
   **dadurch gekennzeichnet,**
   daß zwischen der Einzelleitebene (2) und der Gruppenleitebene (4) eine Koppelleitebene (3) angeordnet ist, daß sich in der Koppelleitebene (3) Koppelprozessoren (31, 32) befinden, die unabhängig von den übergeordneten, vorgeschalteten Automatisierungsgeräten (41) der Gruppenleitebene (4) frei programmierbar sind, daß die Koppelprozessoren (31,32) über Datenleitungen (7,8) mit den untergeordneten Baugruppen (21,22) der Einzelleitebene (2) verbunden sind und daß neben den in den Koppelprozessoren (31,32) autark durchgeführten Steuerungs- und Schutzaufgaben auch Aufgaben von der übergeordneten Gruppenleitebene (4) über die Koppelleitebene (3) an die Einzelleitebene (2) weiter geleitet werden.

2. Kraftwerksleittechnik nach Anspruch 1,
   **dadurch gekennzeichnet,**
   daß zu jedem Koppelprozessor (31) ein gleichartiger Koppelprozessor (32) parallelgeschaltet ist.

3. Kraftwerksleittechnik nach den Ansprüchen 1 und 2,
   **dadurch gekennzeichnet,**
   daß in einem Koppelprozessor (31,32) alle prozessorspezifischen Bauteile doppelt vorhanden sind, wobei entsprechende Bauteile synchron arbeiten, und daß eine Überwachungsschaltung vorhanden ist, durch welche die Signale der einander entsprechenden Bauteile zu vergleichen sind, und falls diese nicht übereinstimmen, eine Umschaltung auf den parallelgeschalteten Koppelprozessor (31,32) vorzunehmen ist.

4. Kraftwerksleittechnik nach den Ansprüchen 1 und 2,
   **dadurch gekennzeichnet,**

daß die Datenleitungen zwischen den Koppelprozessoren (31,32) der Koppelleitebene (3) und den Baugruppen (21,22) der Einzelleitebene (2) Datenbusse (7,8) sind, die nach ein Datenanalysesystem auf Fehlerfreiheit überwachbar sind.

**Claims**

1. Power station process control technique having an individual control level (2) for the components, which are to be controlled, of a process component level (1), having a group control level (4) in which there are arranged automation units (41), by means of which several assemblies (21, 22) of the individual control level (2) are to be controlled respectively, having a communications level (5) in which the automation units (41) of the group control level (4) are connected with each other by means of data lines, and having a process control level (6) superordinate to all the other levels,
   **characterised in that** a coupling control level (3) is arranged between the individual control level (2) and the group control level (4), in that located in the coupling control level (3) there are coupling processors (31, 32) which can be freely programmed independently of the superordinate, series-connected automation units (41) of the group control level (4), in that the coupling processors (31, 32) are connected with the subordinate assemblies (21, 22) of the individual control level (2) by way of data lines (7, 8) and in that in addition to the control and protection tasks carried out autonomously in the coupling processors (31, 32) tasks are also routed from the superordinate group control level (4) by way of the coupling control level (3) to the individual control level (2).

2. Power station process control technique according to claim 1, characterised in that a similar coupling processor (32) is connected in parallel with each coupling processor (31).

3. Power station process control technique according to claims 1 and 2, characterised in that all the processor-specific components are present in duplicate in a coupling processor (31, 32), corresponding components operating in synchronism, and in that there is a monitoring circuit by means of which the signals of the corresponding components can be compared, and, if these do not agree, a switch-over to the parallel-connected coupling processor (31, 32) is to be carried out.

4. Power station process control technique according to claims 1 and 2, characterised in that the data lines between the coupling processors (31, 32) of the coupling control level (3) and the assemblies (21, 22) of the individual control level (2) are data buses (7, 8) which can be monitored for freedom from error by means of a data analysis system.

## Revendications

1. Technique de commande d'une usine d'électricité comportant un plan de conduite individuel (2) pour les composants, qui doivent être commandés, d'un plan (1) de composants de processus, un plan de commande de groupe (4), dans lequel sont disposés des appareils d'automatisation (41), qui doivent commander respectivement plusieurs modules (21,22) du plan de commande individuelle (2), un plan de communication (5), dans lequel les appareils d'automatisation (41) du plan de commande de groupe (4) sont reliés entre eux au moyen de lignes de transmission de données, et un plan (6) de commande de processus, placé à un rang supérieur à tous les autres plans, caractérisée par le fait qu'entre le plan de commande individuelle (2) et le plan de commande de groupe (4) est disposé un plan de commande de couplage (3), que dans le plan de commande de couplage (3) sont disposés des processeurs de couplage (31,32), qui sont librement programmables indépendamment des appareils d'automatisation (41) du plan de commande de groupe (4), qui sont placés à un rang supérieur et sont branchés en amont, et que les processeurs de couplage (31,32) sont raccordés par l'intermédiaire de lignes de transmission de données (7,8) aux modules (21,22), de rang inférieur, du plan de commande individuel (2), et qu'en dehors des tâches de commande et de protection, exécutées d'une manière autonome dans les processeurs de couplage (31,32), également des tâches sont transférées au plan de commande individuel (2) par le plan de commande de groupe (4) de rang supérieur, par l'intermédiaire du plan de commande de couplage (3).

2. Technique de commande d'une usine d'électricité suivant la revendication 1, caractérisée par le fait qu'en parallèle avec chaque processeur de couplage (31) est branché un processeur de couplage identique (32).

3. Technique de commande d'une usine d'électricité suivant les revendications 1 et 2, caractérisée par le fait que tous les composants spécifiques à un processeur sont prévus en double dans un processeur de couplage (31,32), auquel cas des composants correspondants travaillent en synchronisme, et il est prévu un circuit de contrôle qui permet de comparer les signaux des composants qui se correspondent, et que, dans le cas où ces signaux ne coïncident pas, une commutation sur le processeur de couplage (31,32) branché en parallèle doit être exécutée.

4. Technique de commande d'une usine d'électricité suivant les revendications 1 et 2, caractérisée par le fait que les lignes de transmission de données entre les processeurs de couplage (31,32) du plan de commande de couplage (3) et les modules (21,22) du plan de commande individuelle (2) sont des bus de transmission de données (7,8), dans lesquels une absence éventuelle d'erreur peut être contrôlée par un système d'analyse de données.